(19) 

Europäisches
Patentamt
European
Patent Office
Office européen
des brevets

(11) **EP 1 988 475 A1**

(12) **EUROPEAN PATENT APPLICATION**
published in accordance with Art. 158(3) EPC

(43) Date of publication:
**05.11.2008 Bulletin 2008/45**

(21) Application number: **07702216.8**

(22) Date of filing: **26.01.2007**

(51) Int Cl.:
***G06F 17/30*** (2006.01)

(86) International application number:
**PCT/CN2007/000311**

(87) International publication number:
**WO 2007/087754 (09.08.2007 Gazette 2007/32)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **26.01.2006 CN 200610030337**

(71) Applicant: **Wuxi Evermore Software, Inc
Wuxi City, Jiangsu Province 214028 (CN)**

(72) Inventors:
• **HUANG, Fang
  Wuxi, Jiangsu 214028 (CN)**
• **LENG, Ye
  Wuxi, Jiangsu 214028 (CN)**

(74) Representative: **Price, Nigel John King
  J.A. Kemp & Co.
  14 South Square
  Gray's Inn
  London WC1R 5JJ (GB)**

(54) **OBJECT REFERENCE METHOD AND SYSTEM BASED ON OBJECT STORAGE LIBRARY**

(57)     The present invention relates to a method and system of object reference based on a Data Object Oriented Repository System (DOORS); the method includes: a reference object obtains a proxy address of a referred object according to the referred object; a proxy of the referred object is visited according to the proxy address; an object address recorded in the proxy is read; and the reference object refers to the referred object according to the object address. The system includes: a module adapted for a reference object to obtain a proxy address of a referred object according to the referred object; a module adapted to visit a proxy of the referred object according to the proxy address; a module adapted to read an object address recorded in the proxy; a module adapted for the reference object to refer to the referred object according to the object address. The present invention establishes a indirect reference mechanism between all the objects via the proxy; a complex network reference relationship between the objects is changed to a one-to-one reference relationship, additional processing procedure brought by adjusting the address is reduced, and speed of performing the DOORS services and processing performance of the DOORS are improved.

210  A reference object obtains a proxy address of a referred object according to the referred object

220  A proxy of the referred object is visited according to the proxy address

230  An object address recorded in the proxy is read

240  The reference object refers to the referred object according to the object address

Figure 1

EP 1 988 475 A1

**Description**

FIELD OF THE TECHNOLOGY

The present invention relates to a method and system for processing objects in a data object oriented repository system (DOORS), more particular to a method and system of object reference based on a DOORS.

BACKGROUND OF THE INVENTION

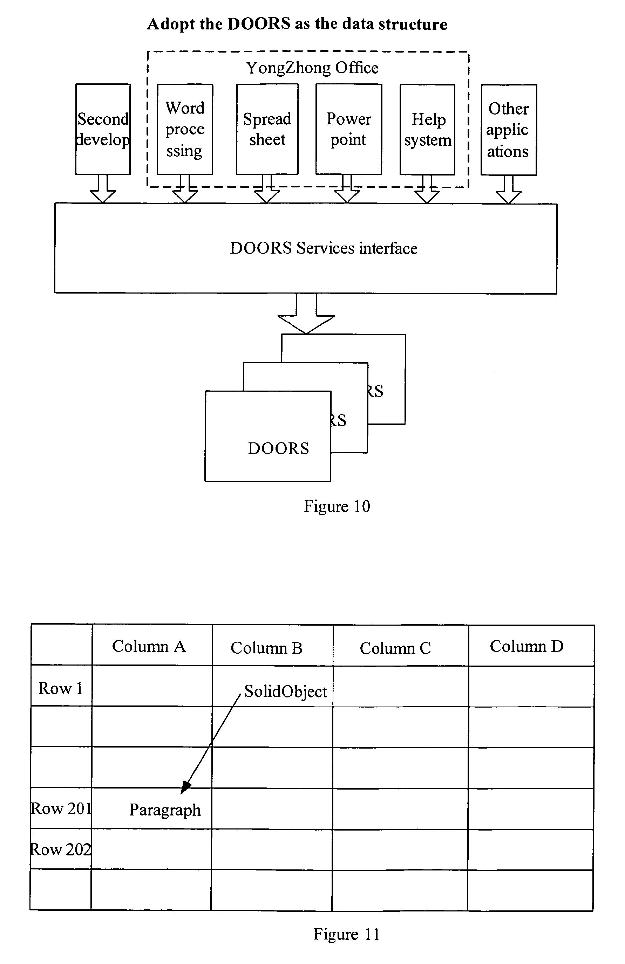

The DOORS is an integrated multi-application data system, which includes tools and services used to generate, store and obtain a data file, and the data file is called an object. Office software usually includes a variety of applications such as spreadsheets, word processing, powerpoint, email, etc.; these applications generally have their own data structures and document formats, and are more independent. In the DOORS, a two-dimensional sheet structure makes the structure of each application, the structures of various applications are unified, further seamless data exchange between the applications is achieved and all the applications use a same document format based on the unity. All application data are put into the DOORS and visited via DOORS services, and users can redevelop based on the DOORS, which is shown in Figure 10.

The objects of the DOORS refer to each other via object addresses, and one object and another object may compose an object by reference. The objects used in a prior art are standard objects defined based on the office applications and stored in the DOORS, such as Document, Paragraph, Slide, Text, and so on. Benefits of defining the standard objects are: once an object for representing a kind of data is defined, the object would become the only format of representing the data; the operation of standardizing an object may ensure brevity of the whole office application data representation; furthermore, most of the defined objects may be reused, which reduces data redundancy and improves greatly operation performance of the office applications. For example, the Paragraph object is used where words are represented, such as words in the word processing, words in spreadsheet cells, words in the slide, such that the Paragraph object becomes the standard object representing paragraph words. The defined objects may be used directly not only by the Office, but also may be used directly if the user performs development based on the DOORS. Positions of the objects in the DOORS are not changeless, and along with the change and increase of content, the objects may adjust the addresses of the objects in the DOORS according to need.

In the prior art, the DOORS services record an object's storage address after the object is placed in the DOORS. The objects refer to each other directly via recording the address of the referred object by the reference object. The DOORS services have to be notified to adjust the address when the address of the referred object is changed; the DOORS services search all the objects in the DOORS to find all the objects referring to the referred object, then notify the objects referring to the referred object to change address reference one by one. In practical applications, methods of object storage, reference and address adjustment in the prior art have following deficiencies:

(1) A complex network structure emerges if the references between the objects are too more, and all the objects have to be traversed in order to sort out the reference objects and the referred objects; the algorithm is complex and time-consuming.

(2) The addresses of the objects in the DOORS are changed frequently; system load is increased and a speed of services operation will be reduced if the DOORS services are required to search all the objects every time and adjust the objects one by one, so efficiency is low.

(3) To avoid such an operation, the DOORS services adopt a method of temporary record, the positions of the existing objects are not influenced possibly when allocating space for a new object in the method. Although the method may avoid adjusting frequently the object address, a lot of "debris" will arise in the space of the DOORS, thus using memory is increased, and the efficiency of services operation is reduced. The principle is similar to the use of a hard disk, there will be much debris on the hard disk used for a long time, and speed of reading and writing files will be influenced.

SUMMARY OF THE INVENTION

An objective of the present invention is to provide a method and system of object reference based on DOORS, for a deficiency of object reference in the prior art, the direct reference between the objects is changed to indirect reference via a proxy, and the complex network reference relationship between the objects is changed to a one-to-one reference relationship, which makes the reference between the objects become clearer and be understood conveniently.

A further objective of the present invention is to provide a method and system for adjusting object addresses in a completely new mechanism, for technical deficiencies existing in the DOORS object address adjustment mechanism of the prior art, additional processing procedure generated by the DOORS due to the address adjustment is reduced effectively, the speed of services operation is increased greatly, the performance of the DOORS services is improved, and the use space of the DOORS is optimized.

In order to realize the objectives of the present invention, the present invention provides a method of object reference based on a data object oriented repository system (DOORS), which includes:

Step 210: A reference object obtains a proxy address of a referred object according to the referred object;

Step 220: A proxy of the referred object is visited according to the proxy address;

Step 230: An object address recorded in the proxy is read; and

Step 240: The reference object refers to the referred object according to the object address.

Before the step 210, the method further includes: the reference object judges whether the proxy address of the referred object exists; the step 210 is performed if the proxy address of the referred object exists, and following steps are performed if the proxy address of the referred object does not exist:

Step 110: The reference object inquires of a DOORS services about the proxy address of the referred object;

Step 120: The DOORS services obtain the proxy address of the proxy by searching a proxy storage area; and

Step 130: The DOORS services send the proxy address to the reference object; and the reference object records the proxy address and performs the step 210.

The step 120 specifically includes:

Step 121: The DOORS services search the proxy of the referred object in the proxy storage area of the DOORS; step 122 is performed if the proxy of the referred object is detected, and step 123 is performed if the proxy of the referred object is not detected;

Step 122: The DOORS services obtain the proxy address of the proxy, and the step 130 is performed;

Step 123: The DOORS services search the referred object in the object storage area of the DOORS and obtain the object address of the referred object;

Step 124: The DOORS services generate a proxy in the proxy storage area of the DOORS;

Step 125: The DOORS services write the object address into the proxy; and

Step 126: The proxy registers the proxy address of the proxy to the DOORS services; the DOORS services obtain the proxy address of the proxy; and the step 130 is performed.

The step 123 specifically includes:

Step 1231: The DOORS services search the referred object in the object storage area of the DOORS; step 1232 is performed if the referred object is detected, and step 1233 is performed if the referred object is not detected;

Step 1232: The object address of the referred object is obtained, and the step 124 is performed;

Step 1233: The DOORS services store the referred object into the object storage area of the DOORS; and

Step 1234: The DOORS services record the object address of the referred object and perform the step 124.

The method further includes a step of adjusting the object address, and the DOORS services perform following steps when the object address is changed:

Step 310: The DOORS services record a new address of the object;

Step 320: The proxy of the object in the proxy storage area of the DOORS is searched; step 330 is performed if the proxy of the object is detected, and step 350 is performed if the proxy of the object is not detected;

Step 330: The DOORS service s visit the proxy of the object;

Step 340: The DOORS services write the new address of the object into the proxy; and

Step 350: Address adjustment ends.

The method further comprises a step of storing the reference object, and following steps are performed when the DOORS services store the reference object:

Step 410: The DOORS services store the reference object into the object storage area of the DOORS;

Step 420: The reference object registers the reference relationship of the reference object to the DOORS services and inquires of the DOORS services about the proxy address of the referred object;

Step 430: The DOORS services search the proxy of the referred object in the proxy storage area of the DOORS; step 440 is performed if the proxy of the referred object is detected, and step 450 is performed if the proxy of the referred object is not detected;

Step 440: The DOORS services obtain the proxy address of the proxy, and send the proxy address to the reference object; the reference object records the proxy address; and the storage ends;

Step 450: The DOORS services search the referred object in the object storage area of the DOORS and obtain the object address of the referred object;

Step 460: The DOORS services generate a proxy in the proxy storage area of the DOORS;

Step 470: The DOORS services write the object address in the proxy;

Step 480: The proxy registers the proxy address of the proxy to the DOORS services; and the DOORS services obtain the proxy address of the proxy; and

Step 490: The DOORS services send the proxy address to the reference object; the reference object records the proxy address; and the storage ends.

An object reference system based on a Data Object Oriented Repository System (DOORS) includes:

a module adapted for a reference object to obtain a proxy address of a referred object according to the referred object;

a module adapted to visit a proxy of the referred object according to the proxy address;

a module adapted to read an object address recorded in the proxy;

a module adapted for the reference object to refer to the referred object according to the object address.

The method and system of object reference based on a DOORS of the present invention establishes a new object reference mechanism, namely all the references between the objects are via the proxy, the direct references of recording the object addresses between the objects in the prior art are changed to indirect references via recording the proxy address, and a complex network reference relationship between the objects is changed to a one-to-one reference relationship, which makes the references between the objects become clearer, be understood conveniently, and an algorithm of managing the objects by the DOORS services is simplified.

The technical solutions of the present invention have fully considered various possible situations existing in the process of referring to the referred object by the reference object, which include:

(1) A reference procedure may be performed directly when the reference object has recorded the proxy address of the referred object;

(2) The reference procedure is performed after the reference object obtains the proxy address of the referred object via the DOORS services when the reference object does not record the proxy address of the referred object, that is, the reference object refers the referred object for the first time;

(3) In the case (2), the DOORS services may obtain the proxy address of the referred object via searching the proxy storage area if the referred object has the proxy address; the DOORS services generate a proxy in the proxy storage area and obtain proxy address of the proxy if the referred object does not have the proxy address, in other words, the referred object is referred to by other objects for the first time;

(4) In the case (3), the DOORS services obtain directly the object address if the referred object has been stored in the DOORS; the DOORS services store the referred object into the storage area of the DOORS, and generate a proxy in the proxy storage area at the same time and obtain the proxy address of the proxy if the referred object is not stored in the DOORS;

In a preferable technical solution of the present invention, the present invention further establishes a new-style object address adjustment mechanism; when the object address is changed, the DOORS services only need to scan the proxy storage area of a small scope, and do not need to scan all the objects in the DOORS as the prior art; at the same time, the DOORS services do not need to notify the reference object one by one to adjust the reference address as the prior art. Therefore, the present invention may reduce the additional processing procedure due to address adjustment, the speed of operation of the DOORS services is increased greatly, and the performance of the DOORS services is improved.

In a preferable technical solution of the present invention, the present invention further establishes a new-style object storage method; the object proxy is established when the object is stored, the DOORS has not to consider the possible influence on the existing objects when storing new objects, and the objects may be stored at any position. Therefore, the space in the DOORS is used fully, debris will not emerge, and the efficiency of performing the DOORS services is improved.

The technical solutions of the present invention are described in detail by drawings and embodiments as following.

BRIEF DESCRIPTIONS OF THE DRAWINGS

Figure 1 is flow chart of a method of object reference based on a DOORS of the present invention;

Figure 2 is a structure schematic diagram of an object reference based on a DOORS of the present invention;

Figure 3 is a flow chart of the embodiment one of the present invention;

Figure 4 is a flow chart of the embodiment two of the present invention;

Figure 5 is a flow chart of the embodiment three of the present invention;

Figure 6 is a flow chart of adjusting the object address of the present invention;

Figure 7 is a schematic diagram of adjusting the object address of the DOORS of the present invention;

Figure 8 is a flow chart of storing the reference object of the present invention;

Figure 9 is a structure schematic diagram of the DOORS of the present invention;

Figure 10 is a schematic diagram of applying the DOORS; and

Figure 11 is a schematic diagram of object reference of the DOORS.

DETAILED DESCRIPTION OF THE PREFERRED EMBODIMENTS

In order to illustrate the technical solutions of the present invention clearly, some special terms involved in the present invention are explained briefly.

(1) DOORS

The DOORS is an integrated multi-application data system, which includes tools and services architecture used to generate, store and acquire a data file, and the data file is called an object. The DOORS provides an object access manner in a two-dimensional table format, and the two-dimensional table only specifies a cell via table number, row number and column number. Each of the cells may place one and only one object, and the cells and the object between the cells may compose of another object; all the cells compose of the DOORS.

(2) DOORS services

The DOORS services refer to the services adopted by the mutuality between the upper application and the DOORS, users may visit and operate the objects via the DOORS services, the DOORS is configured with standard interfaces for visiting the objects, and the interfaces are open outwards; the users only need to know the interfaces and may complete needed operations.

(3) Reference between the objects

The objects may compose of another object via reference between the objects. As shown in Figure 11, an object SolidObject in the cell of column B row 1 is

which indicates a textbox object, and a words paragraph "abcd" is in the textbox; the words "abcd" is a paragraph object in the DOORS, and is put in column A row 201. Therefore, the objects SolidObject and paragraph compose of the textbox object together. An address A201 is recorded in the object SolidObject to point to the paragraph object.

The position of an object is not changeless in the DOORS, and increases with the change of content; the object may adjust the address of the object in the DOORS according to need. As shown in Figure 11, row 201 will become row 202 if a row is inserted before the row 201. At this time, the DOORS services need to notify SolidObject to adjust the reference address of the SolidObject, which is to change the reference address A201 to A202.

(4) Proxy

The proxy records the memory address of the object in the DOORS. As shown in Figure 11, cell B1 stores the object SolidObject, and memory address of the object SolidObject is B1, and the content recorded in the proxy is B1.

(5) Proxy address

The proxy address is the memory address of the proxy in the proxy storage area.

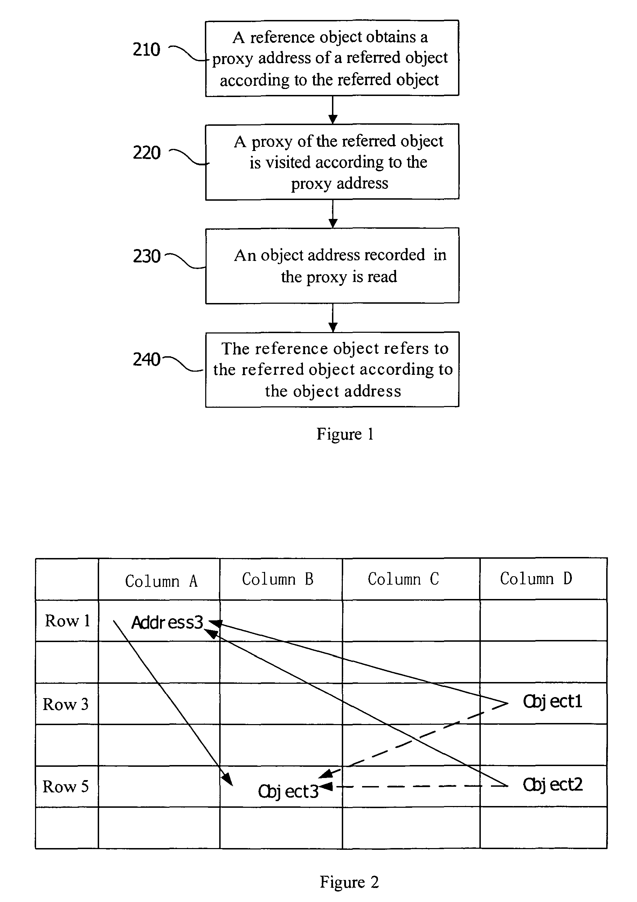

Figure 1 is flow chart of a method of object reference based on a DOORS of the present invention, and following steps are performed during the object reference:

Step 210: A reference object obtains a proxy address of a referred object according to the referred object;

Step 220: A proxy of the referred object is visited according to the proxy address;

Step 230: An object address recorded in the proxy is read; and

Step 240: The reference object refers to the referred object according to the object address.

the method of object reference based on a DOORS establishes a new-style object reference mechanism, in other words, all the references between the objects is via the proxy; the direct reference of recording the address between the objects in the prior art is changed to a indirect reference via the proxy address in the present invention.

Figure 2 is a structure schematic diagram of an object reference based on a DOORS of the present invention. As shown in the Figure 2, there are three objects, Object 1, Object 2 and Object 3 in the DOORS. The objects Object 1 and Object 2 both refers to the object Object 3; the object Object 3 has already a proxy Address3, and the proxy Address3 records the object address of Object3, which is Address3=B5; at the same time, the proxy Address3 is stored in the cell A1, and the objects Object1 and Object2 have recorded that the object Object3's proxy address=A1. The object reference procedure of the present invention is:

The object Object1 visits and extracts the proxy Address3 from the cell A1 according to the proxy address A1 recorded by the object Object1 when needing to visit Object3, and the object address of the object Object3 is known to be B5 according to the record Address=B5; further, the cell B5 may obtain the object Object3 correctly. The visit procedure of the object Object2 is the same. Arrows of Full lines in Figure 2 indicate practical references, and arrows of dashed lines indicate realized effects; the references are indirect references.

The object reference procedure of the present invention includes various possibilities, and the possibilities include:

(1) The reference object has already recorded the proxy of the referred object;

(2) The reference object does not record the proxy address of the referred object, in other words, the reference object refers to the referred object for the first time;

(3) In the case (2), the referred object already has or does not have the proxy address;

(4) In the case (3), the referred object has already or does not have been stored in the DOORS.

The technical solutions of the present invention have considered fully the possibilities above. The technical solution shown in the Figure 1 is a normal reference flow chart in the case (1), and following will illustrate the other cases one by one.

Embodiment one

The embodiment aims at a case that the reference object does not record the proxy address of the referred object, in other words, the reference object refers to the referred object for the first time. In the case, the reference object obtains the proxy address of the referred object via DOORS services, and then the reference flow is referred.

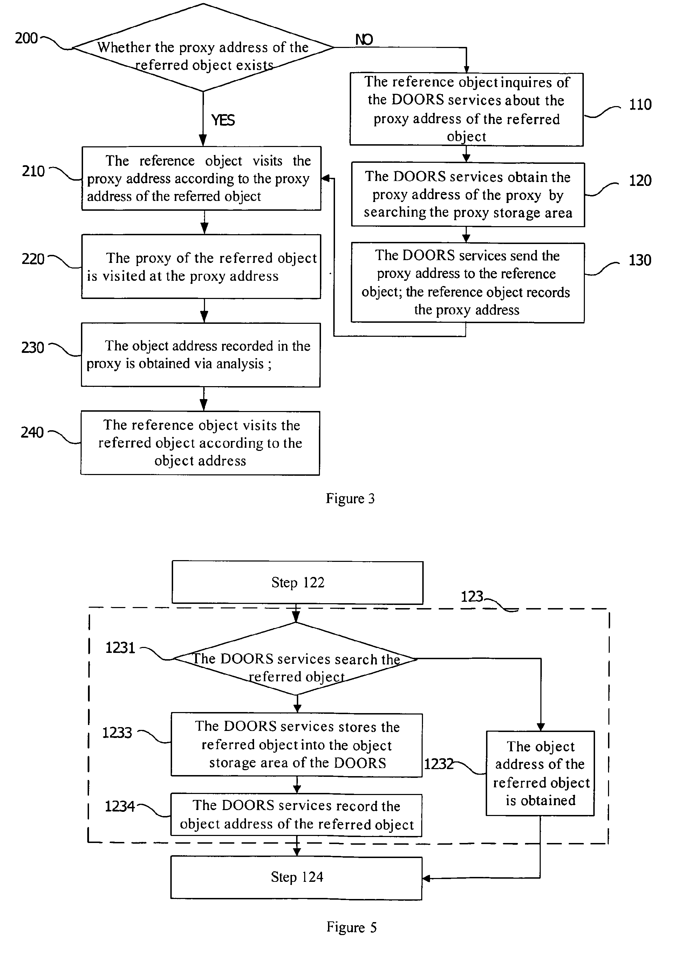

Figure 3 is a flow chart of the embodiment one of the present invention, which specifically includes:

Step 200: The reference object judges whether the proxy address of the referred object exists; step 110 is performed if the proxy address of the referred object does not exist, and step 210 is performed if the proxy address of the referred object exists;

Step 110: The reference object inquires of the DOORS services about the proxy address of the referred object;

Step 120: The DOORS services obtain the proxy address of the proxy by searching the proxy storage area;

Step 130: The DOORS services send the proxy address to the reference object; the reference object records the proxy address and performs step 210 is performed;

Step 210: The reference object visits the proxy address according to the proxy address of the referred object;

Step 220: The proxy of the referred object is visited at the proxy address;

Step 230: The object address recorded in the proxy is obtained via analysis;

Step 240: The reference object visits the referred object according to the object address and obtain the referred object.

Embodiment two

The present embodiment discussed treatment when the referred object has or does not have the proxy address based on the embodiment one. The DOORS services may obtain the proxy address via searching the proxy storage area if the referred object has the proxy address; the DOORS services generate a proxy in the proxy storage area and obtain the proxy address of the proxy if the referred object does not have the proxy address, in other words, the referred object is referred to by other objects for the first time.

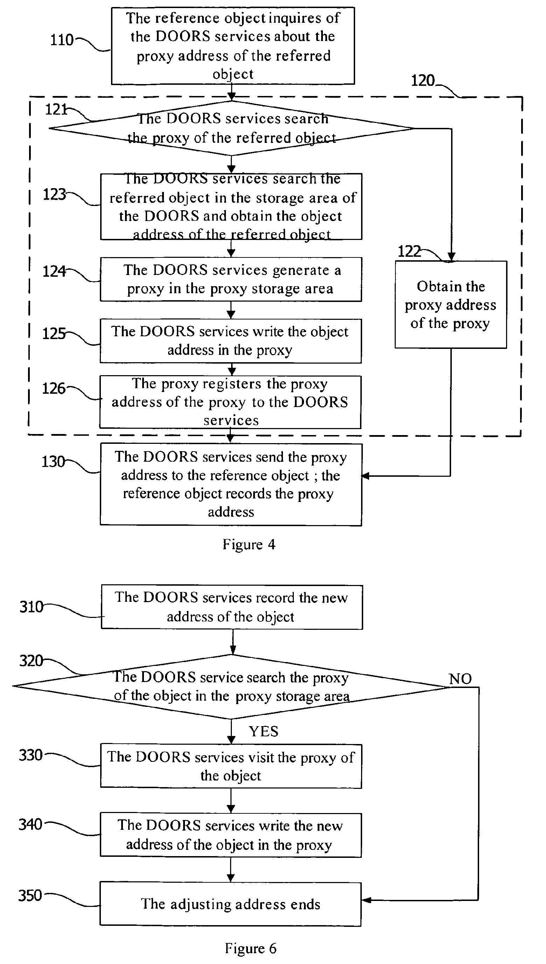

Figure 4 is a flow chart of the embodiment two of the present invention, and the step 120 in the embodiment one specifically is:

Step 121: The DOORS services search the proxy of the referred object in the proxy storage area of the DOORS; step 122 is performed when the proxy is detected, and step 123 is performed when the proxy is not detected;

Step 122: The DOORS services obtain the proxy address of the proxy, and step 130 is performed;

Step 123: The DOORS services search the referred object in the memory area of the DOORS and obtain the object address of the referred object;

Step 124: The DOORS services generate a proxy in the proxy storage area of the DOORS;

Step 125: The DOORS services write the object address in the proxy; and

Step 126: The proxy registers the proxy address of the proxy to the DOORS services; the DOORS services obtain the proxy address of the proxy; and step 130 is performed.

Embodiment three

The embodiment discussed the treatment when the referred object has already or has not been stored in the DOORS based on the embodiment two. The DOORS services obtain the object address directly if the referred object has been stored in the DOORS; the DOORS services store the referred object into the storage area of the DOORS, and the object address is obtained, then steps of generating a proxy and obtaining the proxy address are performed if the referred object has not been stored in the DOORS.

Figure 5 is a flow chart of the embodiment three of the present invention, and the step 123 in the embodiment two specifically is:

Step 1231: The DOORS services search the referred object in the object storage area of the DOORS; step 1232 is performed when the referred object is detected, and step 1233 is performed when the referred object is not detected;

Step 1232: The object address of the referred object is obtained, and step 124 is performed;

Step 1233: The DOORS services store the referred object into the object storage area of the DOORS; and

Step 1234: The DOORS services record the object address of the referred object, and performs the step 124.

Figure 6 is a flow chart of adjusting the object address of the present invention. In the technical solution of the present invention, a step of adjusting the object address is also included, and the DOORS services perform following steps when the object address changes:

Step 310: The DOORS services record the new address of the object;

Step 320: The DOORS services search the proxy of the object in the proxy storage area of the DOORS; step 330 is performed when the proxy is detected, and step 350 is performed when the proxy is not detected;

Step 330: The DOORS services visit the proxy of the object;

Step 340: the DOORS services write the new address of the object in the proxy; and

Step 350: Ends.

In the technical solution above, the present invention establishes a new object address adjusting mechanism; the present invention only needs to notify the DOORS services to modify the proxy address of the object when the object address of the referred object changes, which specifically is: the DOORS services scan only in the proxy storage area, find the proxy recording the object, and modify the proxy address data recorded in the proxy. In the prior art, the DOORS services have to scan all the objects in the DOORS and notify all the objects in the DOORS to change the address reference one by one when one object moves. In the technical solution of the present invention, the proxy storage area placing specially the object address is set in the DOORS, and a new object reference mechanism of referring indirectly between the objects via the proxy is established. Therefore, the DOORS services only need to scan a proxy storage area with a small scope, but do not need to scan all the objects in the DOORS after one object moves; whether the moving object has the proxy address in the proxy memory address; the proxy address data of the proxy is changed if the moving object has the proxy address, and the objects is not referred to by other objects and nothing needs to be done if the moving object does not have the proxy address. At the same time, the DOORS services need not to notify the reference object to adjust the reference addresses one by one. Obviously, the technical solution of the present invention may decrease the additional treatment procedure brought by adjusting addresses compared with the prior art, and the running speed is increased greatly, and the performance of the DOORS services is improved.

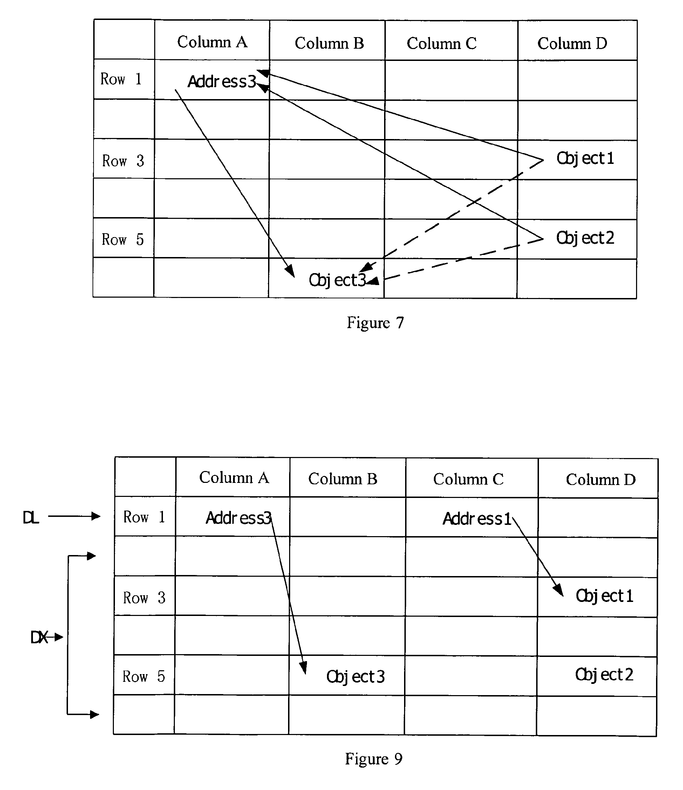

Figure 7 is a schematic diagram of adjusting the object address of the DOORS of the present invention. There are three objects the DOORS: Object1, Object 2 and object3. The objects Object1 and Object2 both refer to the object Object3. After the object Object3 moves to the cell B6 from the cell B5, the DOORS services scan in the proxy storage area, find the proxy Address3 of the object Object3, and updates content Address3 into Address=B6.

When the object Object1 or Object2 visits the object Object3, the object Object1 or Object2 extracts the Address=B6 from the cell A1 according to the proxy address A1 recorded by the object Object1 or Object2, and gets to know that the address of the object Object3 is B6, further extracts correctly the object Object3 from the cell B6.

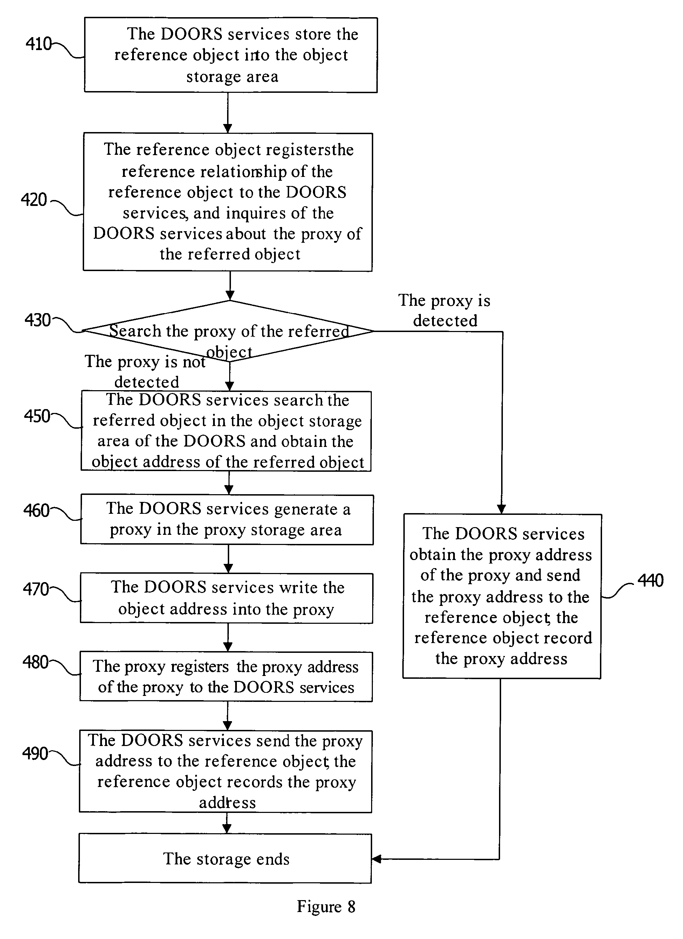

Figure 8 is a flow chart of storing the reference object of the present invention. In the technical solution above, the present invention further includes a storing step, and following steps are performed when the DOORS services store the reference object:

Step 410: The DOORS services store the reference object into the object storage area;

Step 420: The reference object registers the reference relationship of the reference object to the DOORS services and inquires of the DOORS services about the proxy of the referred object;

Step 430: The DOORS services search the proxy of the referred object in the proxy area of the DOORS; step 450 is performed if the proxy is not detected;

Step 440: The DOORS services obtain the proxy address of the proxy and sends the proxy address to the reference object; the reference object record the proxy address; and the storage ends;

Step 450: The DOORS services search the referred object in the object storage area of the DOORS and obtain the object address of the referred object;

Step 460: The DOORS services generate a proxy in the proxy storage area of the DOORS;

Step 470: The DOORS services write the object address into the proxy;

Step 480: The proxy registers the proxy address of the proxy to the DOORS services; and

Step 490: The DOORS services send the proxy address to the reference object; the reference object records the proxy address; and the storage ends.

In the technical solution of the present invention, the object storage may be divided into two cases: the object has a reference relationship and the object has no reference relationship. The object may still adopt a storage manner of the prior art when the object has no reference relationship; the storage may further be divided into two cases when the object has a reference relationship: the object is a reference object or a referred object. When the object is a reference object, the proxy address of the referred object needs to be recorded when the object is stored; when the object is a referred object, the object proxy is established when the object is stored. The technical solution fully accords with a purpose of setting the proxy storage area, only the referred object needs the proxy address, and the reference object needs to know the proxy address of the referred object, which may decrease the address number managed by the proxy storage area, and make the speed of subsequent reference and address adjustment faster. The object storage in the present invention is a storage of establishing an object reference relationship; compared with the single storage in the prior art, the present invention establishes the relationship between the objects during the object storage, and the complicated network reference relationship between the objects is changed into a one-to-one reference relationship, which makes the reference relationship clearer and be understood conveniently.

Figure 9 is a structure schematic diagram of the DOORS of the present invention; As shown in Figure 9, the DOORS is composed of an spreadsheet; the spreadsheet is composed of one or more rows and one or more columns; any row and any column intersect to compose a cell of the spreadsheet; each cell stores only one object or one object address, and all the cells compose the DOORS. Two areas are set in the present invention: an object storage area (DX) and a proxy storage area (DL); the DX is used to store the object, and the DL is used to store the proxy of the object. In the present invention, the DL is set in the first row of the spreadsheet, such as cells A1, B1, C1....., and the DX is set in the other rows except the first row, such as cells A8, B5, C6....... When the object is placed into the spreadsheet, the object and the proxy corresponding to the object one by one are stored; in other words, the object is stored in the DX, and the proxy corresponding to the object one by one is generated in DL; the proxy records storage address information in the address storage area of the object, which is called an object address in the present invention. At the same time, the proxy further corresponds to storage address information of storing the proxy in the DL, and the information is called a proxy address. Record format of the object address and the proxy address above is: column number + row number.

Take the Figure 9 as an example, the objects Object1, Object2 and Object3 are stored respectively in the cells of row 3 column D, row 5 column D and row 5 column B, so their object addresses are recorded respectively as D3, D5 and B5. Storage procedure of the three objects are described as follows:

(1) The object address is D3 if the object Object1 is the reference object referring to the object Object3 and has been stored in the DOORS, so the storage procedure of the object Object3 is: the DOORS services store the object Object3 in the cell of row 5 column B, and record the object address of the object Object3 as B5; because the object3 is the referred object, the DOORS services generate a proxy Address3 in the DL, and the proxy Address 3 records the object address of the object Object3, which is recorded as Address=B5. At the same time, the proxy address of the proxy Address3 is recorded as A1 because the proxy Address3 is stored in the cell of row 1 column A of the spreadsheet. The DOORS services send the proxy address A1 to the object Object1, and the object Object1 records: the proxy address of the object Object3 = A1.

(2) In connection with (1), if the object Object2 is the reference object referring to the object Object3, the storage procedure of the object Object2 is: the DOORS services store the object Object2 in the cell of row 5 column D; because the object Object2 is the reference object, the object Object2 inquires of the DOORS services about the proxy address of the object Object3 and the DOORS services send the proxy address A1 to the object Object2, then the object Object2 recorded: the proxy address of the object Object3 = A1;

(3) In connection with (1), if the object Object2 is the reference object referring to the object Object1, the storage procedure of the object Object2 is: the DOORS services store the object Object2 in the cell of row column D; because the object Object2 is the reference object, the object Object2 inquires of the DOORS services about the proxy address of the object Object1. The DOORS services do not find the proxy of the object Object1 in the DL, and generates a proxy Address1 in the DL, the proxy Address1 records the object address of the object Object1, which is recorded as: Address1=D3. At the same time, because the proxy Address1 is stored in the cell of row 1 column C of the spreadsheet, the proxy address of the proxy Address1 is recorded as C1. the DOORS services send the proxy address C1 to the object Object2, and the object Object2 records: the proxy address of the object Object1 = C1;

(4) The DOORS services store the object Object1 in the cell of row 3 column D if the object Object1 is an object without reference relationship, and record the object address as D3, which is the same with the storage procedure in the prior art.

An object reference system based on a DOORS includes:

a module adapted for a reference object to obtain a proxy address of a referred object according to the referred object;

a module adapted to visit a proxy of the referred object according to the proxy address;

a module adapted to read an object address recorded in the proxy;

a module adapted for the reference object to refer to the referred object according to the object address.

The system further includes a module adapted for the reference object to judge whether the proxy address of the referred object exists; and

a module adapted for the reference object to inquire of a DOORS services about the proxy address of the referred object;

a module adapted for the DOORS services to obtain the proxy address of the proxy by searching a proxy storage area; and

a module adapted for the DOORS services to send the proxy address to the reference object to make the reference object record the proxy address.

the module adapted for the DOORS services to obtain the proxy address of the proxy by searching a proxy storage area includes:

a module adapted for the DOORS services to search the proxy of the referred object in the proxy storage area of an DOORS;

a module adapted for the DOORS services to obtain the proxy address of the proxy;

a module adapted for the DOORS services to search the referred object in the object storage area of the DOORS and obtain the object address of the referred object;

a module adapted for the DOORS services to generate a proxy in the proxy storage area of the DOORS;

a module adapted for the DOORS services to write the object address in the proxy; and

a module adapted for the proxy to register the proxy address of the proxy to the DOORS services to make the DOORS services obtain the proxy address of the proxy.

the module adapted for the DOORS services to search the referred object in the object storage area of the DOORS and obtain the object address of the referred object includes:

a module adapted for the DOORS services to search the referred object in the object storage area of the DOORS;

a module adapted to obtain the object address of the referred object;

a module adapted for the DOORS services to store the referred object into the object storage area of the DOORS; and

a module adapted for the DOORS services to record the object address of the referred object.

The system further includes a module adapted to adjust the object address, and;

a module adapted for the DOORS services to record a new address of the object;

a module adapted to search the proxy of the object in the proxy storage area of the DOORS;

a module adapted for the DOORS services to visit the proxy of the object; and

a module adapted for the DOORS services to write the new address of the object in the proxy.

The system further includes a module adapted to store the reference object, and

a module adapted for the DOORS services to store the reference object into the object storage area of the DOORS;

a module adapted for the reference object to register the reference relationship of the reference object to the DOORS services and inquire of the DOORS services about the proxy address of the referred object;

a module adapted for the DOORS services to search the proxy of the referred object in the proxy storage area of the DOORS;

a module adapted for the DOORS services to obtain the proxy address of the proxy and send the proxy address to the reference object to make the reference object record the proxy address;

a module adapted for the DOORS services to search the referred object in the object storage area of the DOORS to obtain the object address of the referred object;

a module adapted for the DOORS services to generate a proxy in the proxy storage area of the DOORS;

a module adapted for the DOORS services to write the object address into the proxy;

a module adapted for the proxy to register the proxy address of the proxy to the DOORS services to make the DOORS services to obtain the proxy address of the proxy; and

a module adapted for the DOORS services to send the proxy address to the reference object to make the reference object record the proxy address.

Functions and effects of the modules in the system of object reference based on a DOORS have been introduced in detail in the method of object reference based on a DOORS, and will be not repeated here.

Though illustration and description of the present disclosure have been given with reference to the embodiments thereof, it should be appreciated by persons of ordinary skill in the art that various changes in forms and details can be made without deviation from the scope of this disclosure, which are defined by the appended claims.

**Claims**

1. A method of object reference based on a data object oriented repository system (DOORS), comprising:

   step 210, a reference object obtaining a proxy address of a referred object according to the referred object;
   step 220, visiting a proxy of the referred object according to the proxy address;
   step 230, reading an object address recorded in the proxy; and
   step 240, the reference object referring to the referred object according to the object address.

2. The method according to claim 1, wherein before the step 210, the method further comprises: judging, by the reference object, whether the proxy address of the referred object exists; performing the step 210 if the proxy address of the referred object exists, and performing following steps if the proxy address of the referred object does not exist:

   step 110, the reference object inquiring of a DOORS services about the proxy address of the referred object;
   step 120, the DOORS services obtaining the proxy address of the proxy by searching a proxy storage area; and
   step 130, the DOORS services sending the proxy address to the reference object; and the reference object recording the proxy address and performing the step 210.

3. The method according to claim 2, wherein the step 120 specifically comprises:

   step 121, the DOORS services searching the proxy of the referred object in the proxy storage area of the DOORS; performing step 122 if the proxy of the referred object is detected, and performing step 123 if the proxy of the referred object is not detected;
   step 122, the DOORS services obtaining the proxy address of the proxy and performing the step 130;
   step 123, the DOORS services searching the referred object in the object storage area of the DOORS and obtaining the object address of the referred object;
   step 124, the DOORS services generating a proxy in the proxy storage area of the DOORS;
   step 125, the DOORS services writing the object address into the proxy; and
   step 126, the proxy registering the proxy address of the proxy to the DOORS services; the DOORS services obtaining the proxy address of the proxy; and performing the step 130.

4. The method according the claim 3, wherein the step 123 specifically comprises:

   step 1231, the DOORS services searching the referred object in the object storage area of the DOORS; performing step 1232 if the referred object is detected, and performing step 1233 if the referred object is not detected;
   step 1232, obtaining the object address of the referred object, and performing the step 124;
   step 1233, the DOORS services storing the referred object into the object storage area of the DOORS; and
   step 1234, the DOORS services recording the object address of the referred object and performing the step 124.

5. The method according to claim 1, wherein the method further comprises a step of adjusting the object address, and the DOORS services perform following steps when the object address is changed:

step 310, the DOORS services recording a new address of the object;

step 320, the DOORS services searching the proxy of the object in the proxy storage area of the DOORS; performing step 330 if the proxy of the object is detected, and performing step 350 if the proxy of the object is not detected,;

step 330, the DOORS services visiting the proxy of the object;

step 340, the DOORS services writing the new address of the object into the proxy; and

step 350, ending address adjustment.

6. The method according to claim 1, wherein the method further comprises a step of storing the reference object, and following steps are performed when the DOORS services store the reference object:

step 410, the DOORS services storing the reference object into the object storage area of the DOORS;

step 420, the reference object registering the reference relationship of the reference object to the DOORS services and inquiring of the DOORS services about the proxy address of the referred object;

step 430, the DOORS services searching the proxy of the referred object in the proxy storage area of the DOORS; performing step 440 if the proxy of the referred object is detected, and performing step 450 if the proxy of the referred object is not detected;

step 440, the DOORS services obtaining the proxy address of the proxy and sending the proxy address to the reference object; the reference object recording the proxy address; and ending the storage;

step 450, the DOORS services searching the referred object in the object storage area of the DOORS and obtaining the object address of the referred object;

step 460, the DOORS services generating a proxy in the proxy storage area of the DOORS;

step 470, the DOORS services writing the object address into the proxy;

step 480, the proxy registering the proxy address of the proxy to the DOORS services; and the DOORS services obtaining the proxy address of the proxy; and

step 490, the DOORS services sending the proxy address to the reference object; the reference object recording the proxy address; and ending the storage.

7. A system of object reference based on a Data Object Oriented Repository System (DOORS), comprising:

a module adapted for a reference object to obtain a proxy address of a referred object according to the referred object;

a module adapted to visit a proxy of the referred object according to the proxy address;

a module adapted to read an object address recorded in the proxy; and

a module adapted for the reference object to refer to the referred object according to the object address.

8. The system according to claim 7, wherein the system further comprises a module adapted for the reference object to judge whether the proxy address of the referred object exists; and

a module adapted for the reference object to inquire of a DOORS services about the proxy address of the referred object;

a module adapted for the DOORS services to obtain the proxy address of the proxy by searching a proxy storage area; and

a module adapted for the DOORS services to send the proxy address to the reference object to make the reference object record the proxy address.

9. The system according to claim 8, wherein the module adapted for the DOORS services to obtain the proxy address of the proxy by searching a proxy storage area comprises:

a module adapted for the DOORS services to search the proxy of the referred object in the proxy storage area of an DOORS;

a module adapted for the DOORS services to obtain the proxy address of the proxy;

a module adapted for the DOORS services to search the referred object in the object storage area of the DOORS and obtain the object address of the referred object;

a module adapted for the DOORS services to generate a proxy in the proxy storage area of the DOORS;

a module adapted for the DOORS services to write the object address in the proxy; and

a module adapted for the proxy to register the proxy address of the proxy to the DOORS services to make the DOORS services obtain the proxy address of the proxy.

10. The system according to claim 9, wherein the module adapted for the DOORS services to search the referred object in the object storage area of the DOORS, and obtain the object address of the referred object comprises:

a module adapted for the DOORS services to search the referred object in the object storage area of the DOORS;

a module adapted to obtain the object address of the referred object;
a module adapted for the DOORS services to store the referred object into the object storage area of the DOORS; and
a module adapted for the DOORS services to record the object address of the referred object.

11. The system according to claim 7, wherein the system further comprises a module adapted to adjust the object address, and:

a module adapted for the DOORS services to record a new address of the object;
a module adapted to search the proxy of the object in the proxy storage area of the DOORS;
a module adapted for the DOORS services to visit the proxy of the object; and
a module adapted for the DOORS services to write the new address of the object in the proxy.

12. The system according to claim 7, wherein the system further comprises a module adapted to store the reference object, and:

a module adapted for the DOORS services to store the reference object into the object storage area of the DOORS;
a module adapted for the reference object to register the reference relationship of the reference object to the DOORS services and inquire of the DOORS services about the proxy address of the referred object;
a module adapted for the DOORS services to search the proxy of the referred object in the proxy storage area of the DOORS;
a module adapted for the DOORS services to obtain the proxy address of the proxy and send the proxy address to the reference object to make the reference object record the proxy address;
a module adapted for the DOORS services to search the referred object in the object storage area of the DOORS to obtain the object address of the referred object;
a module adapted for the DOORS services to generate a proxy in the proxy storage area of the DOORS;
a module adapted for the DOORS services to write the object address into the proxy;
a module adapted for the proxy to register the proxy address of the proxy to the DOORS services to make the DOORS services to obtain the proxy address of the proxy; and
a module adapted for the DOORS services to send the proxy address to the reference object to make the reference object record the proxy address.

210 — A reference object obtains a proxy address of a referred object according to the referred object

220 — A proxy of the referred object is visited according to the proxy address

230 — An object address recorded in the proxy is read

240 — The reference object refers to the referred object according to the object address

Figure 1

| | Column A | Column B | Column C | Column D |
|---|---|---|---|---|
| Row 1 | Address3 | | | |
| | | | | |
| Row 3 | | | | Object1 |
| | | | | |
| Row 5 | | Object3 | | Object2 |
| | | | | |

Figure 2

Figure 3

Figure 5

110 — The reference object inquires of the DOORS services about the proxy address of the referred object

120

121 — The DOORS services search the proxy of the referred object

123 — The DOORS services search the referred object in the storage area of the DOORS and obtain the object address of the referred object

124 — The DOORS services generate a proxy in the proxy storage area

125 — The DOORS services write the object address in the proxy

126 — The proxy registers the proxy address of the proxy to the DOORS services

122 — Obtain the proxy address of the proxy

130 — The DOORS services send the proxy address to the reference object ; the reference object records the proxy address

Figure 4

310 — The DOORS services record the new address of the object

320 — The DOORS service search the proxy of the object in the proxy storage area

NO

YES

330 — The DOORS services visit the proxy of the object

340 — The DOORS services write the new address of the object in the proxy

350 — The adjusting address ends

Figure 6

|  | Column A | Column B | Column C | Column D |
|---|---|---|---|---|
| Row 1 | Address3 |  |  |  |
|  |  |  |  |  |
| Row 3 |  |  |  | Object1 |
|  |  |  |  |  |
| Row 5 |  |  |  | Object2 |
|  |  | Object3 |  |  |

Figure 7

|  | Column A | Column B | Column C | Column D |
|---|---|---|---|---|
| Row 1 | Address3 |  | Address1 |  |
|  |  |  |  |  |
| Row 3 |  |  |  | Object1 |
|  |  |  |  |  |
| Row 5 |  | Object3 |  | Object2 |
|  |  |  |  |  |

DL →

DX →

Figure 9

410 — The DOORS services store the reference object into the object storage area

420 — The reference object registers the reference relationship of the reference object to the DOORS services, and inquires of the DOORS services about the proxy of the referred object

430 — Search the proxy of the referred object

The proxy is detected

The proxy is not detected

450 — The DOORS services search the referred object in the object storage area of the DOORS and obtain the object address of the referred object

460 — The DOORS services generate a proxy in the proxy storage area

470 — The DOORS services write the object address into the proxy

480 — The proxy registers the proxy address of the proxy to the DOORS services

490 — The DOORS services send the proxy address to the reference object, the reference object records the proxy address

440 — The DOORS services obtain the proxy address of the proxy and send the proxy address to the reference object, the reference object record the proxy address

The storage ends

Figure 8

**Adopt the DOORS as the data structure**

YongZhong Office

| Second develop | Word proce ssing | Spread sheet | Power point | Help system | Other applic ations |

DOORS Services interface

DOORS

Figure 10

| | Column A | Column B | Column C | Column D |
|---|---|---|---|---|
| Row 1 | | SolidObject | | |
| | | | | |
| | | | | |
| Row 201 | Paragraph | | | |
| Row 202 | | | | |
| | | | | |

Figure 11

<table>
<tr><td colspan="2" align="center">**INTERNATIONAL SEARCH REPORT**</td><td>International application No.<br>PCT/CN2007/000311</td></tr>
</table>

A. CLASSIFICATION OF SUBJECT MATTER

G06F17/30(2006.01)i
According to International Patent Classification (IPC) or to both national classification and IPC

B. FIELDS SEARCHED

Minimum documentation searched (classification system followed by classification symbols)
    IPC: G06F17/30
        G06F

Documentation searched other than minimum documentation to the extent that such documents are included in the fields searched

Electronic data base consulted during the international search (name of data base and, where practicable, search terms used)
    WPI EPODOC PAJ PATENTPIC CNPAT
        OBJECT STRO+ REFER+ LINK POINTER ADDRESS AGENT PROXY

C. DOCUMENTS CONSIDERED TO BE RELEVANT

| Category* | Citation of document, with indication, where appropriate, of the relevant passages | Relevant to claim No. |
|---|---|---|
| X | US5043869A, (Hitachi, Ltd.), 27 August 1991(27.08.1991),col.1,line 25 to line 37 of the description, Fig.1 | 1,7 |
| A | | 2-6,8-12 |
| A | CN1125991A, (ERICSSON TELEFON AB L M), 03 July 1996(03.07.1996),the whole document | 1-12 |
| A | EP1519273A2, (MICROSOFT CORP) ,30 March 2005(30.03.2005),the whole document | 1-12 |

☐ Further documents are listed in the continuation of Box C.      ☒ See patent family annex.

| | |
|---|---|
| \*      Special categories of cited documents:<br><br>"A"    document defining the general state of the art which is not considered to be of particular relevance<br><br>"E"    earlier application or patent but published on or after the international filing date<br><br>"L"    document which may throw doubts on priority claim (S) or which is cited to establish the publication date of another citation or other special reason (as specified)<br><br>"O"    document referring to an oral disclosure, use, exhibition or other means<br><br>"P"    document published prior to the international filing date but later than the priority date claimed | "T"    later document published after the international filing date or priority date and not in conflict with the application but cited to understand the principle or theory underlying the invention<br><br>"X"    document of particular relevance; the claimed invention cannot be considered novel or cannot be considered to involve an inventive step when the document is taken alone<br><br>"Y"    document of particular relevance; the claimed invention cannot be considered to involve an inventive step when the document is combined with one or more other such documents, such combination being obvious to a person skilled in the art<br><br>"&"document member of the same patent family |
| Date of the actual completion of the international search<br>**25 Apr. 2007 (25.04.2007)** | Date of mailing of the international search report<br>**17 May 2007 (17.05.2007)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>        CUI,Liyan<br><br>Telephone No. (86-10)62084945 |

Form PCT/ISA /210 (second sheet) (April 2007)

## INTERNATIONAL SEARCH REPORT
### Information on patent family members

| | International application No. |
|---|---|
| | PCT/CN2007/000311 |

| Patent Documents referred in the Report | Publication Date | Patent Family | Publication Date |
|---|---|---|---|
| US5043869A | 27.08.1991 | EP0220683 A2 | 06.05.1987 |
| CN1125991A | 03.07.1996 | WO9500907 A1 | 05.01.1995 |
| | | SE9302175 A | 24.12.1994 |
| | | SE501433 B | 13.02.1995 |
| | | AU7088894A | 17.01.1995 |
| | | FI956243 A | 22.12.1995 |
| | | NO955276 A | 23.02.1996 |
| | | EP0705460 A1 | 10.04.1996 |
| | | JP8512151T | 17.12.1996 |
| | | BRPI9406910A | 08.07.2003 |
| EP1519273A2 | 30.03.2005 | US2005065973A1 | 24.03.2005 |
| | | JP2005100402A | 14.04.2005 |
| | | KR20050030139 A | 29.03.2005 |
| | | CN1661559A | 31.08.2005 |
| | | INDEL200401790A | 25.08.2006 |

Form PCT/ISA /210 (patent family annex) (April 2007)